# EUROPÄISCHE PATENTSCHRIFT

(11) **EP 1 332 779 B1**
(45) Veröffentlichungstag und Bekanntmachung des Hinweises auf die Patenterteilung: **14.11.2007**
(21) Anmeldenummer: 03001507.7
(22) Anmeldetag: 23.01.2003
(51) Int. Cl.: A63G 21/08, A63G 1/34

(54) **Fahrgerät, insbesondere für Vergnügungsparks, -Messen oder dergleichen**
Amusement ride car system, especially for fun-fairs, amusement parks or the like
Manège avec véhicules, en particulier pour fêtes foraines, parcs d'attractions ou similaire

(30) Priorität: 30.01.2002 DE 10203729
(43) Veröffentlichungstag der Anmeldung: 06.08.2003
(73) Patentinhaber: KUKA Roboter GmbH, 86165 Augsburg (DE); Robocoaster Limited, Warwick Gates, Warwick CV34 6FE (GB)
(72) Erfinder: de Gol, Gino, Perton, South Staffordshire WV6 7RP (GB)
(74) Vertreter: Lempert, Jost

(56) Entgegenhaltungen:
- WO-A-01/95989
- DE-C- 441 391
- NL-A- 9 401 636
- US-A- 5 527 221
- US-A- 5 595 121
- US-B1- 6 302 029
- US-B1- 6 341 564

## Beschreibung

Die Erfindung betrifft ein Fahrgerät nach dem Oberbegriff des Anspruchs 1.

Ein derartiges Fahrgerät ist in der internationalen Anmeldung PCT/GB01/02537 (internationale Veröffentlichungsnummer WO-A-0 195 989) beschrieben. Es handelt sich um einen in der Regel stationär angeordneten Mehrachsen-Industrieroboter, der an seiner Roboterhand mit einem Träger für Personen versehen ist, der vorzugsweise in Form eines Doppelsitzes ausgebildet ist, wobei Sicherheits- und Rückhalteeinrichtüngen in Form von Bügeln vorgesehen sind, um die Personen sicher auf dem Sitz zu halten, auch wenn beispielsweise eine Überkopfbewegung durchgeführt wird.

Gemäß dieser Voranmeldung können in geeigneten Anordnungen mehrere derartigen Roboter stationär nebeneinander angeordnet sein. Es können darüber hinaus zwei Roboter auf einem Karussell drehbar angeordnet sein, die allerdings auf dem Karussellträger fest angeordnet sind und daher einen festen Relativabstand aufweisen. Weiterhin können Roboter auch entlang einer Säule auf und abverfahren werden.

Dennoch sind die Bewegungsmöglichkeiten, insbesondere hinsichtlich der Relativbewegungen von Robotern sehr eingeschränkt; insbesondere sind keine unabhängigen oder asynchronen Bewegungen der Roboter relativ zueinander möglich

Die US 5,595,121 zeigt eine Achterbahn mit einzelnen Wageneinheiten, in denen relativ zu den Wageneinheiten fest montierte Sitze vorhanden sind, so dass relativ zu den Wageneinheiten bzw. deren Rädern keine Relativbewegungen von Teilen der einzelnen Fahreinheit und damit keine durch solche Relativbewegungen bedingten dynamischen Kräfte auftreten.

Der Erfindung liegt die Aufgabe zugrunde, ein gattungsgemäßes Fahrgerät nach der PCT/GB01/02537 dahingehend weiterzuentwickeln, dass die Einsatzmöglichkeiten eines solchen neuartigen Fahrgeräts, die Passagierkapazität und das Vergnügen der dieses benutzenden Personen unter Gewährleistung hoher Sicherheit erhöht werden.

Erfindungsgemäß wird die genannte Aufgabe bei einem Fahrgerät der eingangs genannten Art durch die kennzeichnenden Merkmale des Anspruchs 1 gelöst.

Mittels der Erfindung können mehrere Roboter mit vorzugsweise sechs Eigenbewegungsachsen auf einer geschlossenen Fahrbahn, sei es synchron, sei es insbesondere aber auch asynchron bzw. völlig unabhängig voneinander bewegt werden, soweit die Sicherheitsabstände zwischen benachbarten Robotern eingehalten werden. Wesentlich ist, dass bei solchen Bewegungen nicht notwendigerweise an - hier nicht vorhandenen - Endpunkten der Bahn ein abruptes Abstoppen zum Umkehren der Bewegungsrichtung notwendig ist, wie dies bei endlichen Linearbahnen in nachteiliger Weise der Fall ist.

Darüber hinaus wird eine höhere Mobilität und eine höhere Kapazität als bei den bisher vorgeschlagenen Konzepten erreichbar, wodurch der Einsatz als erfindungsgemäßes Fahrgeräts in Vergnügungsparks, -Messen oder dergleichen attraktiver wird.

Die erfindungsgemäße geschlossene Fahrbahn kann dabei kreis- oder ovalförmig aber auch elliptisch ausgebildet sein oder mit konvexen und konkaven Bögen versehen sein.

Neben einer stehenden Anordnung der Roboter kann auch eine hängende Anordnung oder aber eine mit einer mehr oder minder geneigten Ausrichtung der Achse des Sockels des Roboters zur Vertikalen, insbesondere mit einer horizontalen Ausrichtung derselben vorgesehen sein. Es ist dabei insbesondere möglich, eine Fahrbahn derart auszubilden, dass auf ein und derselben Fahrbahn stehende und hängende Roboter sowie ggf. auch zusätzlich unter einem endlichen Winkel der ersten Achse (A1-Achse) zur Senkrechten ausgerichtete Roboter, insbesondere Roboter mit horizontal ausgerichteten Sockeln verfahrbar sind.

In bevorzugter Ausgestaltung ist dabei vorgesehen, dass die Fahrbahn Schienen aufweist, bzw. durch solche gebildet ist. Es können dabei eine Einzelschiene vorhanden sein, die insbesondere bei hängender Ausführung auch aus Kostengründen vorteilhaft ist; die Fahrbahn kann aber auch durch zwei parallel verlaufende Einzelschienen gebildet sein, insbesondere bei stehender Anordnung des verfahrbaren Roboters oder aber mit horizontaler Ausrichtung oder sonst wie zur vertikalen geneigten Ausrichtung des Sockels.

In einer äußerst bevorzugten Ausgestaltung ist vorgesehen, dass die Leistungsversorgung kabelfrei erfolgt, um die Unabhängigkeit der Bewegungsmöglichkeiten der Roboter zu gewährleisten. Es kann dabei in bevorzugter Weise vorgesehen sein, dass neben der Fahrbahn eine Energieversorgungsschiene angeordnet ist, die vorzugsweise drei Phasen aufweist, um eine Versorgung mit einem herkömmlichen Drehstrom zu gewährleisten; am Roboter oder einem diesen tragenden Wagen sind dann in entsprechender Weise drei Stromabnehmer, die insbesondere mit an den Phasenleitern schleifend anliegenden Federn gebildet sind, vorgesehen.

Dies ermöglicht eine freie Bewegung des Roboters entlang der Bahn, ohne dass das Kabel für die Robotersteuerung, die Positionsüberwachung und Servofeedback in einer komplexen Weise zum sich bewegenden Roboter und Wagen geführt sind, was letzteres Probleme hinsichtlich des Verschlingens von solchen Kabeln, der Geschwindigkeit und Bewegungseinschränkungen sowie Ermüdungsfehler verursachen könnte. Dies wird durch die Anordnung der Robotersteuerung oder Integration derselben auf dem Wagen unterstützt. Es werden lediglich Stromabnehmer entlang der Bahn vorgesehen. Dies ermöglicht die einzigartige Anordnung eines Mehrachsenroboters auf einem sich bewegenden Wagen ohne jegliche Einschränkung der Bewegungsmöglichkeit des Wagens und des Roboters sowie seines Armes.

In weiterer bevorzugter Ausbildung ist vorgesehen, dass mindestens ein Roboter an einem Wagen angeordnet ist, wobei zur Aufnahme der Steuersignale Antennen vorgesehen sein können.

Am Roboter oder auf einem diesen tragenden Wagen ist zumindest eine Steuereinrichtung vorgesehen, die vorzugsweise durch einen herkömmlichen Personalcomputer gebildet ist.

Das zusätzliche Merkmal einer Roboter-Peripherieschnittstelle und entsprechender Kommunikationsverbindungen einer Robotersteuerungseinrichtung, wie die Steuerung und Sicherheitsanzeige, die entweder hardwaremäßig in die Bahn eingebaut sein kann und/oder über drahtlose Kommunikationseinrichtungen erfolgt, beinhaltet einen weiteren Vorteil. Dies erlaubt weiterhin die Sequenzierung und Kontrolle des wagenbasierten Roboters mit äußeren Einrichtungen und Eingängen und damit eine dynamische Wechselwirkung mit diesen, unabhängige davon, ob der Roboter an einer bestimmten Position steht oder sich entlang der Bahn bewegt. Diese Ausgestaltung des wagenbasierten Roboters bietet eine flexible und sich immer anpassenden Kollisionskontrolle bei hoher Dynamik der Passagierbewegungen. Dies beruht darauf, dass die Passagiere auf einer über mehrere Achsen bewegten Plattform transportiert werden, üblicherweise eine Plattform, die über sechs inhärente Achsen des Roboters bewegbar ist, während sich der Roboter selbst entlang einer Bahn bewegt, die einer Achterbahn ähnliche Bahn sein kann. Selbst wenn der Wagen auf der Bahn angehalten wird, bleibt das Risiko einer Weiterbewegung über hinreichende Entfernungen und sollte überwacht und gesteuert werden, was durch ein wirksames intrinsisches Sicherheitssteuersystem auf dem sich bewegenden Wagen geschieht.

Weiterhin können auf dem verfahrbaren Teil des erfindungsgemäßen Fahrgeräts, also entweder am Roboter (-sockel) selbst oder einem diesen tragenden Wagen Leistungsversorgungseinheiten, insbesondere unterbrechungsfreie sowie ein Antrieb für die Fahrbewegung des Roboters vorgesehen sein - wenn auch bei synchroner Bewegung der Roboter ein schleppendes Verfahren grundsätzlich möglich ist. In bevorzugter Ausgestaltung wird dabei die Leistungsversorgungseinheit sowie der Antrieb in einer Leistungseinheit zusammengefaßt.

Eine weitere bevorzugte Ausgestaltung sieht vor, dass auf einem Wagen mehr als ein Roboter angeordnet sind.
In weiterer bevorzugter Ausgestaltung ist vorgesehen, dass die Wagen mit mechanischen Puffern versehen sind, die sich die über die Einhüllende des Roboters in Vorwärts- und Rückwärtsbewegung erstrecken, um eine klare und wirksame Trennung der Passagiere sicherzustellen. Der gesamte mögliche Bewegungsraum des Roboters muss berücksichtigt werden und es muss eine mechanische passiv sichere Trennung der Wageneinheiten auf der gemeinsamen Bahn sicher garantiert werden. Die Puffer müssen sich daher über die Wagenkontur hinaus selbst erstrecken und auch Bögen der Bahn sowohl an der Vorderseite als auch an der Rückseite folgen, um so einen Schutz des gesamten Roboterbewegungsraums und damit für die Passagiere sicherzustellen. Dieses Konzept kann dahingehend weiterentwickelt werden, dass zusätzlich eine aktive Sicherheit vorgesehen wird. Beispielsweise können die Puffer unter sicheren Umständen zurückgezogen werden und damit eine höhere Dichte der Wagen beispielsweise in einem Einsteige-/Aussteige-Bereich zu ermöglichen. Sie können so in ihre voll ausgefahrene Sicherheitsposition während des normalen Betriebs entlang der Bahn gebracht werden.

Weiterhin kann zumindest eine Nothalteinrichtung vorgesehen sein, um eine intrinsische Sicherheit zum Anhalten der Wagen und/oder Roboter in einem Notfall bei einem Steuerfehler zu gewährleisten. Dies kann eine fehlersichere Positionsdetektionstechnologie in jedem Wagen beinhalten, die durch eine externe Sensoreinrichtung überwacht wird, die im Gesamtsteuersystem und der Bahneinheit vorgesehen sein kann.

In weiterer bevorzugter Ausgestaltung ist vorgesehen, dass ein Roboter mehr als zwei Sitze trägt, vorzugsweise in Form von Mehrfachsitzen.

Bevorzugte Weiterbildungen sehen vor, dass externe visuelle oder Peripherie-Einrichtungen mit der Bewegung des Wagens und/oder des Roboter synchronisiert sind und/oder dass Schwingungsdämpfer zwischen Wagen und Roboter vorgesehen sind, um Steuerungselemente und die Elektronik zu schützen.

Die Anordnung eines sitztragenden Mehrachsen-Industrieroboters und seiner Steuerung auf einem Wagen, der an Schienen entlang bewegbar ist und die hierdurch erreichbaren Bewegungsmöglichkeiten und die damit verbundenen Bewegungsdynamiken sind einmalig.

Weitere Merkmale und Vorteile der Erfindung ergeben sich aus den Ansprüchen und aus der nachfolgenden Beschreibung, in der Ausführungsbeispiele des erfindungsgemäßen Fahrgerätes unter Bezugnahme auf die Zeichnungen einzeln erläutert sind. Dabei zeigt:

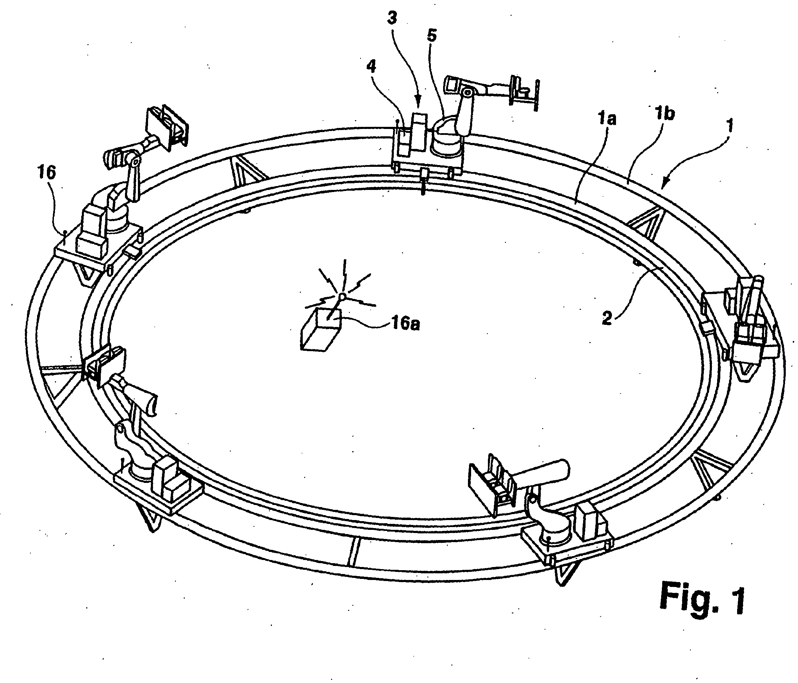

- Fig. 1: eine Gesamtdarstellung eines erfindungsgemäßen Fahrgerätes;

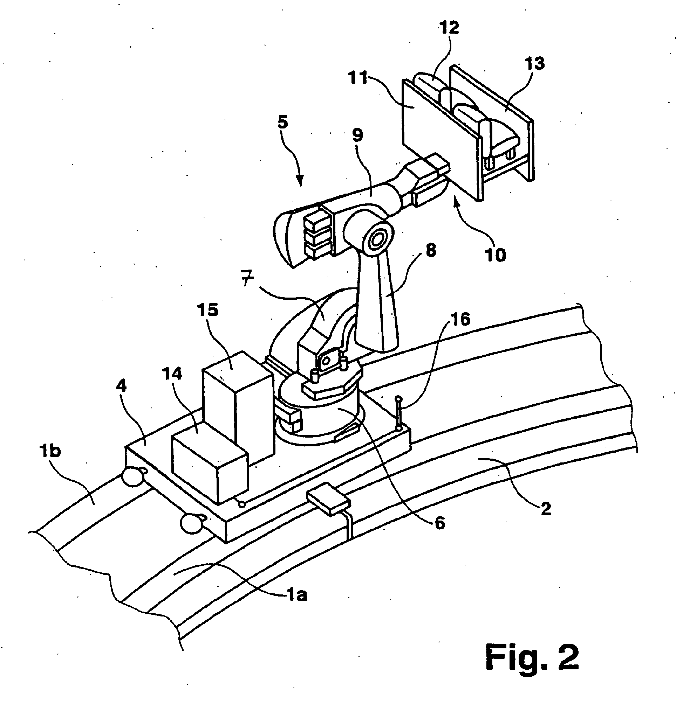

- Fig. 2: Details des erfindungsgemäßen Fahrgeräts;
- Fig. 3: weitere Details zur elektrischen Leistungsübertragung vom stationären auf den beweglichen Teil des erfindungsgemäßen Fahrgeräts;
- Fig. 4: einen Schnitt durch die energieführende Schiene des erfindungsgemäßen Fahrgerätes;
- Fig. 5: die Darstellung der Anordnung zweier Roboter auf einem Wagen, der durch eine Schiene getragen ist; und
- Fig. 6: die Darstellung einer Anordnung zweier Roboter an einem Wagen, der hängend an einer Schiene verfahren wird.

Das erfindungsgemäße Fahrgerät insbesondere für Vergnügungs-Parks und -Messen oder dergleichen also ein Vergnügungsgerät, weist in der dargestellten Ausführungsform eine geschlossene kreisringförmige Fahrbahn 1 auf, die durch zwei parallel geführte Schienen 1a, 1b gebildet ist. Bei Zweierschienen kann auch eine Tragschiene vorhanden sein. Statt kreisringform kann die geschlossene Fahrbahn auch oval, elliptisch oder mit mehreren konkaven und konvexen Bögen ausgebildet sein.

Neben den Tragschienen ist eine elektrische energieführende Schiene 2 vorgesehen, die vorzugsweise mit drei Kontaktschienen für drei Phasen eines üblichen Drehstromes ausgebildet ist. -

Der bewegliche Teil 3 des erfindungsgemäßen Fahrgeräts weist im dargestellten Ausführungsbeispiel zunächst einen Wagen 4 auf. Auf dem Wagen 4 ist ein herkömmlicher Industrieroboter 5 mit Sockel 6, Karussell 7, Schwinge 8, Roboterarm 9 und Roboterhand 10 angeordnet. Mit seiner Roboterhand 10 trägt der Roboter 5 einen Personenträger 11 mit im dargestellten Ausführungsbeispiel zwei Sitzen 12 und entsprechenden Sicherheitshalteeinrichtungen 13 für die getragenen Personen.

Auf dem Wagen 4 findet sich eine Leistungsteil mit Antrieb zum Verfahren des Wagens 4 sowie einer unterbrechungsfreien Stromversorgung, die insbesondere mit einem elektrischen Energiespeicher (Akku) ausgerüstet sein kann. Es findet sich weiterhin auf dem Wagen 4 eine Steuereinrichtung 15, wie ein Robotersteuergerät, vorzugsweise in Form eines herkömmlichen Personalcomputers. Weiterhin ist am Wagen 3 eine Antenne 16 zur leitungslosen Übertragung von Steuersignalen von einer zentralen Sendeeinrichtung 16a her vorgesehen.

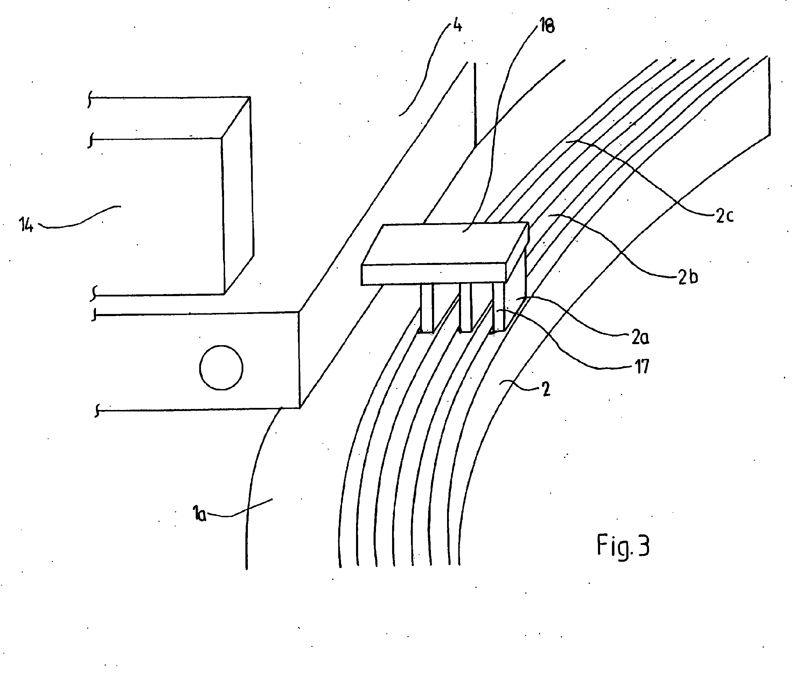

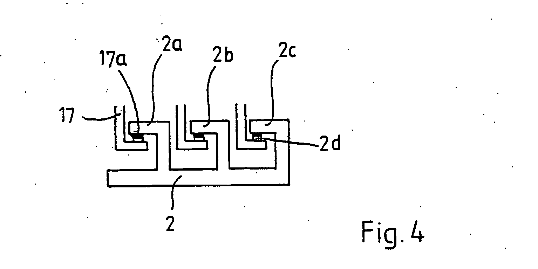

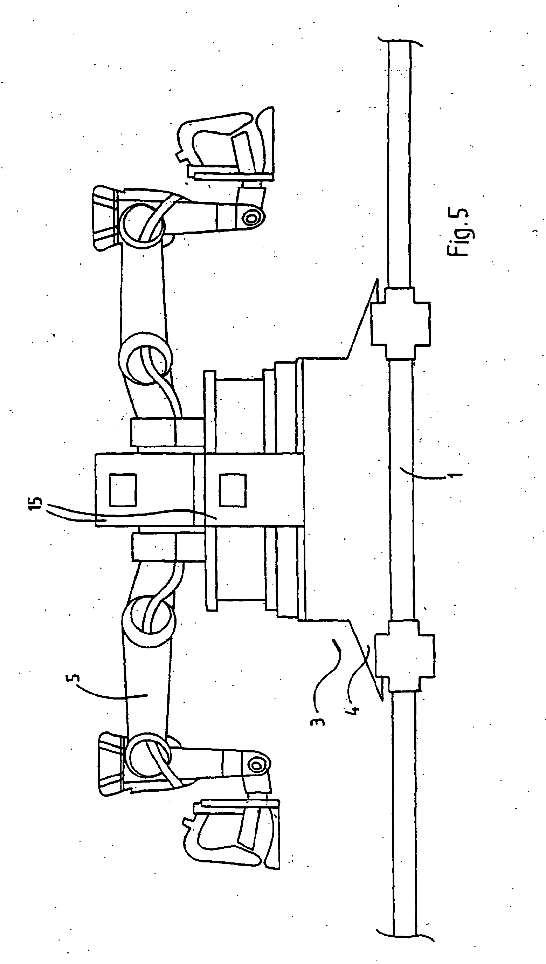

Die energieführende Schiene 2 besteht aus drei einzelnen Schienenbahnen 2a, 2b, 2c (Fig. 3 und 4), die als Winkelschienen ausgebildet sind. Sie sind jeweils an der Unterseite ihres horizontalen Schenkels mit elektrisch leitenden Bahnen 2d versehen. Zwischen den einzelnen Schienenbahnen 2a, 2b, 2c greift jeweils ein Stromabnehmer 17, der über einen Ansatz 18 mit dem Wagen 4 verbunden ist, ein. Der Stromabnehmer 17 ist ebenfalls winkelförmig ausgebildet und weist auf der Oberseite seines den horizontalen Schenkel der Schienen 2a, 2b, 2c untergreifenden horizontalen Schenkel eine Leistungsabnahmefeder 17a auf, die gegen die stromführenden Bahnen 2d der energieführenden Schiene 2 federnd anliegen. Derart kann von diesen Bahnen elektrische Leistung zum beweglichen Teil des erfindungsgemäßen.Fahrgeräts abgenommen werden. Während auf einem Wagen 4 bei der bisher beschriebenen Ausführungsform lediglich ein Roboter 5 angeordnet ist, zeigt die Fig. 5 eine Ausgestaltung mit der Anordnung zweier Roboter 5 auf einem Wagen 3. Ebenfalls sind zwei Robotersteuereinrichtungen 15 dargestellt. Nicht dargestellt aber vorhanden sind ein Antrieb für den Wagen 3 sowie ebenfalls einen unterbrechungsfreie Stromversorgung. Bei der Ausgestaltung der Fig. 5 wird der Wagen 3 auf den Schienen 1 getragen.

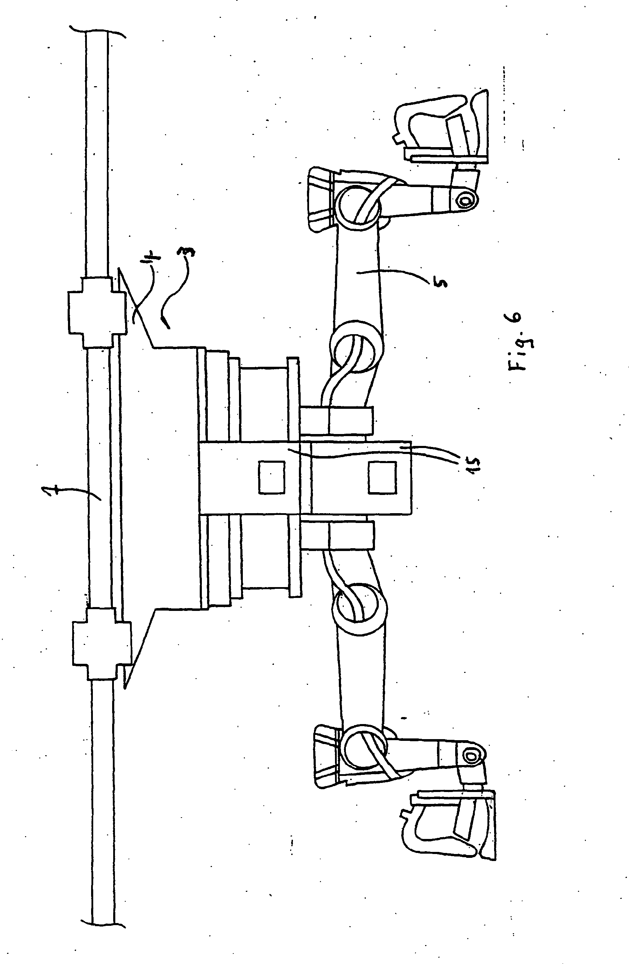

Alternativ kann auch vorgesehen sein, dass ein Wagen 4 mit ein oder mehreren, insbesondere auch zwei Robotern an Schienen 1 hängend verfahren wird, wie dies in Fig. 6 dargestellt ist.

### Bezugszeichenliste

- 1: Fahrbahn
- 1a: parallel geführte Schiene
- 1b: parallel geführte Schiene
- 2: energieführende Schiene
- 2a: Schienenbahn
- 2b: Schienenbahn
- 2c: Schienenbahn
- 2d: elektrisch leitende Bahn
- 3: beweglicher Teil
- 4: Wagen
- 5: Roboter
- 6: Sockel
- 7: Karussell
- 8: Schwinge
- 9: Roboterarm
- 9: Roboterarm
- 10: Roboterhand
- 11: Personenträger
- 12: Sitze
- 13: Sicherheitshalteeinrichtung
- 15: Steuereinrichtung
- 16: Antenne
- 16a: Sendeeinrichtung
- 17: Stromabnehmer
- 17a: Leistungsabnahmefeder
- 18: Ansatz

## Patentansprüche

1. Fahrgerät, insbesondere für Vergnügungsparks, Messen oder dergleichen, mit einer Anzahl von jeweils einen Personenträger (11) aufweisenden Roboter (5) mit mehreren Drehachsen, **gekennzeichnet durch** eine geschlossene Fahrbahn (1) für die Roboter (5), an der mehrere Roboter (5) unabhängig voneinander unter Gewährleistung relativer Sicherheitsabstände zwischen den Robotern (5) verfahrbar sind.

2. Gerät nach Anspruch 1, **dadurch gekennzeichnet, dass** die Fahrbahn (1) kreisförmig ausgebildet ist.

3. Gerät nach Anspruch 1, **dadurch gekennzeichnet, dass** die Fahrbahn (1) oval ausgebildet ist.

4. Gerät nach Anspruch 1, **dadurch gekennzeichnet, dass** die Fahrbahn (1) elliptisch ausgebildet ist.

5. Gerät nach Anspruch 1, **dadurch gekennzeichnet, dass** die Fahrbahn (1) konvexe und konkave Bögen aufweist.

6. Gerät nach einem der vorangehenden Ansprüche, **dadurch gekennzeichnet, dass** der oder die Roboter (5) auf der Fahrbahn (1) stehend verfahrbar sind.

7. Gerät nach einem der vorangehenden Ansprüche, **dadurch gekennzeichnet, dass** ein oder mehrere Roboter (5) an der Fahrbahn (1) hängend verfahrbar sind.

8. Gerät nach einem der vorangehenden Ansprüche, **dadurch gekennzeichnet, dass** Roboter (5) derart angeordnet sind, dass die Achse ihrer Sockel (A1-Achse) geneigt zur Fahrbahn gerichtet ist.

9. Gerät nach einem der vorangehenden Ansprüche, **dadurch gekennzeichnet, dass** mehrere Roboter (5) auf der Fahrbahn synchron miteinander verfahrbar sind.

10. Gerät nach einem der vorangehenden Ansprüche, **dadurch gekennzeichnet, dass** die Fahrbahn durch Schienen gebildet ist.

11. Gerät nach Anspruch 10, **dadurch gekennzeichnet, dass** die Roboter (5) jeweils durch eine einzige Schiene gehalten werden.

12. Gerät nach Anspruch 10, **dadurch gekennzeichnet, dass** die Roboter (5) jeweils durch zwei parallel zueinander verlaufende Einzelschienen gehalten werden.

13. Gerät nach einem der vorangehenden Ansprüche, **dadurch gekennzeichnet, dass** eine kabelfreie Energieversorgung der Roboter (5) gegeben ist.

14. Gerät nach Anspruch 13, **gekennzeichnet durch** eine neben der Fahrbahn verlaufende energieführende Schiene (2).

15. Gerät nach Anspruch 14, **dadurch gekennzeichnet, dass** die Schiene (2) drei Phasenleiter aufweist.

16. Gerät nach Anspruch 14 oder 15, **dadurch gekennzeichnet, dass** mit dem Roboter kontaktfedern zur Kontaktierung der stromführenden Leiter energieführenden Schienen (2) vorgesehen sind.

17. Gerät nach einem der vorangehenden Ansprüche, **dadurch gekennzeichnet, dass** mindestens ein Roboter (5) an einem Wagen (4) angeordnet ist.

18. Gerät nach einem der vorangehenden Ansprüche, **dadurch gekennzeichnet, dass** der Roboter (5) oder der Wagen (4) mit einer Antenne (16) zur Übertragung von Steuersignalen verbunden ist.

19. Gerät nach Anspruch 17, **dadurch gekennzeichnet, dass** der Wagen (4) eine Steuereinrichtung trägt.

20. Gerät nach Anspruch 19, **dadurch gekennzeichnet, dass** die Steuereinrichtung durch einen herkömmlichen Personalcomputer ausgebildet ist.

21. Gerät nach einem der Ansprüche 17 bis 19, **dadurch gekennzeichnet, dass** der Wagen (4) eine unterbrechungsfreie Leistungsversorgungseinheit trägt.

22. Gerät nach Anspruch 21, **gekennzeichnet durch** einen Fahrantrieb für den Wagen (4).

23. Gerät nach Anspruch 21 und Anspruch 22, **dadurch gekennzeichnet, dass** unterbrechungsfreie Leistungsversorgungseinheit und Fahrantrieb in einer Leistungseinheit (10) zusammengefasst sind.

24. Gerät nach einem der vorangehenden Ansprüche, **dadurch gekennzeichnet, dass** auf einem Wagen (4) zumindest zwei Roboter (5) angeordnet sind.

25. Gerät nach einem der Ansprüche 17 bis 24, **dadurch gekennzeichnet, dass** die Wagen mit mechanischen Puffern versehen sind, die sich über die Bewegungseinhüllende des Roboters in Vorwärts- und Rückwärtsbewegung erstrecken, um eine klare und wirksame Trennung der Passagiere sicherzustellen.

26. Gerät nach einem der vorangehenden Ansprüche, **dadurch gekennzeichnet, dass** zumindest eine Nothalteinrichtung vorgesehen ist, um eine intrinsische Sicherheit zum Anhalten der Wagen und/oder Roboter in einem Notfall bei einem Steuerfehler zu gewährleisten.

27. Gerät nach einem der vorangehenden Ansprüche, **dadurch gekennzeichnet, dass** ein Roboter mehr als zwei Sitze trägt.

28. Gerät nach einem der vorangehenden Ansprüche, **dadurch gekennzeichnet, dass** externe visuelle oder Peripherie-Einrichtungen mit der Bewegung des Wagens und/oder des Roboter synchronisiert sind.

29. Gerät nach einem der vorangehenden Ansprüche, **dadurch gekennzeichnet, dass** Schwingungsdämpfer zwischen Wagen und Roboter vorgesehen sind, um Steuerungselemente und die Elektronik zu schützen.

## Claims

1. A transport device, in particular for amusement parks, trade fairs or the like, having a number of robots (5) with a plurality of axes of rotation, the robots (5) in each case comprising a passenger carrier (11), said transport device being **characterised by** a closed track (1) for the robots (5) on which the plurality of robots (5) may mutually independently be displaced while maintaining relative safety distances between the robots (5).

2. A device according to claim 1, **characterised in that** the track (1) is of circular construction.

3. A device according to claim 1, **characterised in that** the track (1) is of oval construction.

4. A device according to claim 1, **characterised in that** the track (1) is of elliptical construction.

5. A device according to claim 1, **characterised in that** the track (1) comprises convex and concave curves.

6. A device according to any one of the preceding claims, **characterised in that** the robot(s) (5) are displaceable upright on the track (1).

7. A device according to any one of the preceding claims, **characterised in that** one or more robots (5) are displaceable suspended from the track (1).

8. A device according to any one of the preceding claims, **characterised in that** robots (5) are arranged in such a manner that the axis of their base (A1 axis) is oriented inclined relative to the track.

9. A device according to any one of the preceding claims, **characterised in that** a plurality of robots (5) may be displaced together synchronously on the track.

10. A device according to any one of the preceding claims, **characterised in that** the track is formed by rails.

11. A device according to claim 10, **characterised in that** the robots (5) are in each case held by a single rail.

12. A device according to claim 10, **characterised in that** the robots (5) are in each case held by two individual rails extending parallel to one another.

13. A device according to any one of the preceding claims, **characterised in that** a cable-free energy supply for the robots (5) is provided.

14. A device according to claim 13, **characterised by** an energy-supply rail (2) which extends beside the track.

15. A device according to claim 14, **characterised in that** the rail (2) comprises three phase conductors.

16. A device according to claim 14 or claim 15, **characterised in that** contact springs for contacting the current-carrying conductors of the energy-supply rails (2) are provided with the robot.

17. A device according to any one of the preceding claims, **characterised in that** at least one robot (5) is arranged on a carriage (4).

18. A device according to any one of the preceding claims, **characterised in that** the robot (5) or the carriage (4) is connected to an aerial (16) for transmitting control signals.

19. A device according to claim 17, **characterised in that** the carriage (4) carries a control device.

20. A device according to claim 19, **characterised in that** the control device takes the form of a conventional personal computer.

21. A device according to any one of claims 17 to 19, **characterised in that** the carriage (4) carries an uninterruptible power supply unit.

22. A device according to claim 21, **characterised by** a travelling gear for the carriage (4).

23. A device according to claim 21 and claim 22, **characterised in that** the uninterruptible power supply unit and travelling gear are combined in a power unit (10).

24. A device according to any one of the preceding claims, **characterised in that** at least two robots (5) are arranged on a carriage (4).

25. A device according to any one of claims 17 to 24, **characterised in that** the carriages are provided with mechanical buffers which extend beyond the movement envelope of the robot in the forward and backward direction in order to ensure clear and effective separation of the passengers.

26. A device according to any one of the preceding claims, **characterised in that** at least one emergency stop apparatus is provided in order to ensure intrinsic safety for stopping the carriages and/or robots in an emergency in the event of a control error.

27. A device according to any one of the preceding claims, **characterised in that** a robot carries more than two seats.

28. A device according to any one of the preceding claims, **characterised in that** external visual or ancillary devices are synchronised with the motion of the carriage and/or robot.

29. A device according to any one of the preceding claims, **characterised in that** vibration dampers are provided between the carriage and robot in order to protect control elements and the electronics.

## Revendications

1. Appareil d'amusement pour parcs d'attractions notamment, foires ou autres, comprenant un certain nombre de robots (5) présentant chacun un porte-personnes (11) et plusieurs axes de rotation, **caractérisé par** une piste fermée (1) pour les robots (5), sur laquelle se déplacent plusieurs robots (5) indépendamment l'un de l'autre en préservant des distances de sécurité relatives entre les robots.

2. Appareil selon la revendication 1, **caractérisé en ce que** la piste (1) est de forme circulaire.

3. Appareil selon la revendication 1, **caractérisé en ce que** la piste (1) est de forme ovale.

4. Appareil selon la revendication 1, **caractérisé en ce que** la piste (1) est de forme elliptique.

5. Appareil selon la revendication 1, **caractérisé en ce que** la piste (1) présente des courbes convexes et concaves.

6. Appareil selon une des revendications qui précèdent, **caractérisé en ce que** le ou les robot(s) (5) se déplacent debout sur la piste (1).

7. Appareil selon une des revendications qui précèdent, **caractérisé en ce que** un ou plusieurs robot(s) (5) se déplacent suspendus sur la piste (1).

8. Appareil selon une des revendications qui précèdent, **caractérisé en ce que** des robots (5) sont disposés de manière à ce que l'axe de leur socle (axe A1) soit incliné vers la piste.

9. Appareil selon une des revendications qui précèdent, **caractérisé en ce que** plusieurs robots (5) se déplacent ensemble de manière synchrone sur la piste.

10. Appareil selon une des revendications qui précédent, **caractérisé en ce que** la piste est formée par des rails.

11. Appareil selon la revendication 10, **caractérisé en ce que** les robots (5) sont tenus chacun par un seul rail.

12. Appareil selon la revendication 10, **caractérisé en ce que** les robots (5) sont tenus chacun par deux rails simples parallèles.

13. Appareil selon une des revendications qui précèdent, **caractérisé en ce que** l'alimentation en énergie des robots (5) est assurée sans câble.

14. Appareil selon la revendication 13, **caractérisé par** un rail conducteur d'énergie (2) courant à côté de la piste.

15. Appareil selon la revendication 14, **caractérisé en ce que** le rail (2) présente trois fils de phase.

16. Appareil selon l'une des revendications 14 ou 15, **caractérisé en ce qu'**avec le robot sont prévues des lames de contact pour contacter les fils électriques des rails conducteurs d'énergie (2).

17. Appareil selon une des revendications qui précèdent, **caractérisé en ce qu'**au moins un robot (5) est placé sur un chariot (4).

18. Appareil selon un des revendications qui précèdent, **caractérisé en ce que** le robot (5) ou le chariot (4) est relié à une antenne (16) pour la transmission de signaux de commande.

19. Appareil selon la revendication 17, **caractérisé en ce que** le chariot (4) porte un dispositif de commande.

20. Appareil selon la revendication 19, **caractérisé en ce que** le dispositif de commande est constitué par un microordinateur traditionnel.

21. Appareil selon une des revendications 17 à 19, **caractérisé en ce que** le chariot (4) porte une unité d'alimentation de puissance non interruptible.

22. Appareil selon la revendication 21, **caractérisé par** un système d'entraînement pour le chariot (4).

23. Appareil selon la revendication 21 et la revendication 22, **caractérisé en ce que** l'unité d'alimentation de puissance non interruptible et le système d'entraînement sont regroupés en une unité de puissance (10).

24. Appareil selon une des revendications qui précédent, **caractérisé en ce qu'**au moins deux robots (5) sont placés sur un chariot (1).

25. Appareil selon une des revendications 17 à 24, **caractérisé en ce que** les chariots sont munis de butoirs mécaniques qui s'étendent par delà l'enveloppe du mouvement du robot dans les sens de marche avant et de marche arrière afin de garantir une séparation claire et efficace des passagers.

26. Appareil selon une des revendications qui précèdent, **caractérisé en ce qu'**est prévu au moins un dispositif d'arrêt d'urgence afin de garantir une sécurité intrinsèque pour arrêter les chariot et/ou les robots en cas d'urgence dans le cas d'une erreur de commande.

27. Appareil selon une des revendications qui précèdent, **caractérisé en ce qu'**un robot porte plus de deux sièges.

28. Appareil selon une des revendications qui précèdent, **caractérisé en ce que** des dispositifs visuels externes ou des dispositifs périphériques sont synchronisés avec le mouvement du chariot et/ou du robot.

29. Appareil selon une des revendications qui précèdent, **caractérisé en ce que** sont prévus des amortisseurs entre le chariot et le robot afin de protéger les éléments de la commande et l'électronique.
